# DEMANDE DE BREVET EUROPEEN

(11) **EP 0 731 474 A1**
(43) Date de publication de la demande: **11.09.1996**
(21) Numéro de dépôt: 96103436.0
(22) Date de dépôt: 06.03.1996
(51) Int. Cl.: H01B 13/02

(54) **Dispositif de câblage pour machine de câblage alterné ou de type SZ**

(30) Priorité: 07.03.1995 FR 9502646
(71) Demandeur: E. KERTSCHER S.A., CH-1462 Yvonand (CH)
(72) Inventeur: Kertscher, Eberhard, 1462 Yvonand (CH); Bach, Christian, 1586 Vallamand (CH)
(74) Mandataire: Patry, Didier Marcel Pierre

(57) **Abrégé**

L'invention concerne un dispositif de câblage pour machine de câblage de type SZ pour assembler en hélice une pluralité de brins de fil unitaires, ledit dispositif comportant des moyens rotatifs de répartition de brins de fil unitaires à travers lesquels s'étendent lesdits brins, lesdits moyens rotatifs étant animés d'un mouvement de rotation alterné, une filière de câblage à travers laquelle passent lesdits brins pour converger vers un point, désigné par point de câblage, en aval duquel lesdits brins sont réunis par enroulement en hélice alternativement dans des sens opposés, des moyens d'extrusion comprenant une filière d'extrusion dans laquelle les brins une fois câblés ou assemblés sont recouverts d'une matière d'extrusion, caractérisé en ce que le point de câblage des brins unitaires est situé dans le voisinage immédiat de la filière d'extrusion.

## Description

L'invention concerne un dispositif de câblage pour machine de câblage alterné destinée à la production de câbles de type SZ et plus particulièrement un tel dispositif qui permette de réaliser un câble multibrins en câblage alterné SZ présentant une qualité améliorée sans pour cela augmenter son prix de revient.

Il est connu, pour conférer une plus grande souplesse à un faisceaux de brins de fil ou câbles de tout type (fil électrique, fibre optique ou analogue), d'assembler ou de câbler ces brins ensemble en hélice.

Les machines à câbler pour réaliser ce genre de câbles sont essentiellement de deux types.

Un premier type de machine de câblage connu, qui câble les brins unitaires en hélice en leur induisant une torsion dans un unique sens, est décrit par exemple dans la demande de brevet EP 0 438 082.

Dans ce type de machine les bobines débitrices des brins unitaires sont solidaires d'un plateau animé d'un mouvement de rotation dans un sens, les brins étant amenés vers une bobine réceptrice stationnaire, via une filière de câblage.

Comme la vitesse de production est donnée par la vitesse maximale du plateau, on comprend aisément que celle-ci est vite limitée compte tenu de l'importance des masses en rotation solidaires du plateau tournant.

En outre ce type de câblage nécessite l'arrêt de la machine pour le changement des bobines débitrices et ne permet pas en conséquence de travailler de façon continue.

Ceci constitue donc des inconvénients qui ont été palliés par le développement d'un deuxième type de machine de câblage, dite machine de câblage SZ dans laquelle les brins de fil sont débités à partir de bobines stationnaires sur une station de torsion SZ dans laquelle ils sont alternativement tordus dans deux sens opposés respectivement le sens S et le sens Z. Ces brins de fil ainsi assemblés ou câblés passent ensuite à travers une filière de câblage avant d'être enroulés sur une bobine réceptrice également fixe.

On connaît déjà ce type de machine, notamment du brevet DE 682 267.

Ces machines sont généralement associées à un poste d'enrobage du câble disposé en aval de la filière de câblage et dans lequel les brins unitaires câblés sont figés dans une matière d'enrobage afin de garder les torsions qui ont été données aux brins par la machine avant l'enroulage sur la bobine réceptrice et de conférer au câble ses dimensions définitives.

Toutefois dans les zones d'inversion du sens de torsadage S au sens Z du câble, la traction d'enroulage du câble sortant de la filière de câblage, les tractions sur le câble induites par les frottements aux points de contact des brins de fil unitaires entre les bobines débitrices ainsi que le dispositif de câblage et le frottement du câble avec les divers éléments de la machine, notamment en aval de la filière de câblage lors des torsions des brins de fil unitaires dans le sens S et dans le sens Z, ramènent les brins de fil unitaires dans des directions parallèles.

Or, les parties de câble qui présentent des brins parallèles ont une rigidité plus grande non souhaitable. De telles variations de rigidité entraînent une souplesse non homogène le long du câble et rendent son utilisation plus délicate dans de nombreuses applications.

Pour pallier cet inconvénient il a été proposé d'enrubanner le câble immédiatement en aval de la filière de câblage pour maintenir la cohésion du câblage avant l'opération d'enrobage de câblage. Une machine à câbler équipée d'un tel dispositif d'enrubannage est décrite par exemple dans la demande de brevet EP 0 356 596.

Cette solution d'enrubannage des brins de fil unitaires câblés n'est cependant pas encore tout à fait satisfaisante en ce qu'elle implique l'utilisation d'un poste supplémentaire d'enrubannage en liaison avec la machine de câblage, ce qui entraîne naturellement un coût supplémentaire en équipement et augmente donc le prix de revient final du câble ainsi fabriqué. Cette solution ne permet pas non plus de travailler en continu avec les conséquences sur la vitesse de production du câble que cela implique.

L'invention a donc pour but principal de remédier aux inconvénients de l'art antérieur susmentionné en fournissant un dispositif de câblage simple, compact et économique permettant notamment de fabriquer à vitesse élevée un câble multibrins de type SZ ayant une souplesse homogène sur toute sa longueur.

A cet effet, l'invention a pour objet un dispositif de câblage pour machine de câblage de type SZ pour assembler en hélice une pluralité de brins de fil unitaires, ledit dispositif comportant des moyens rotatifs de répartition de brins de fil unitaires à travers lesquels s'étendent lesdits brins, lesdits moyens rotatifs étant animés d'un mouvement de rotation alterné, une filière de câblage à travers laquelle passent lesdits brins pour converger vers un point, désigné par point de câblage, en aval duquel lesdits brins sont réunis par enroulement en hélice alternativement dans des sens opposés, des moyens d'extrusion comprenant une filière d'extrusion dans laquelle les brins une fois câblés ou assemblés sont recouverts d'une matière d'extrusion, caractérisé en ce que le point de câblage des brins unitaires est situé dans le voisinage immédiat de la filière d'extrusion et en ce que le dispositif comprend en outre des moyens de guidage de chaque brins de fil, lesdits moyens de guidage s'étendant entre lesdits moyens rotatifs de répartition et ladite filière de câblage.

Grâce à ces caractéristiques, l'endroit d'assemblage des brins de fil est disposé aussi proche que possible de l'endroit d'extrusion si bien que les brins de fil sont recouverts par la matière d'extrusion immédiatement après leur assemblage ou câblage. Les torsions imposées aux brins de fils lors de leur assemblage par les moyens rotatifs alternés sont ainsi conservées, la position des brins de fil assemblés les uns par rapport aux autres étant figée par la matière d'extrusion.

Le dispositif de câblage selon l'invention garantit ainsi un assemblage des brins de fil qui élimine ou pour le moins diminue considérablement les portions de câble comprenant des brins parallèles dans les zones d'inversions de torsion, ce qui permet notamment la fabrication d'un câble ayant un pas constant et ainsi une souplesse homogène sur toute sa longueur.

Ces moyens de guidage assurent en outre ainsi un guidage parfait des brins de fil pratiquement jusqu'au point de câblage ou en d'autres termes jusqu'au moment où les brins de fil pénètrent dans l'orifice de la filière de câblage. Un tel arrangement permet une augmentation du rendement de torsion en ce sens que la position relative des brins de fil est conservée lors du câblage ou assemblage de ces brins, et que toute permutation de position des brins est évitée. Ces moyens de guidage permettent donc d'augmenter considérablement la qualité des câbles fabriqués.

En outre, cet arrangement permet aux brins d'être toujours maintenus à proximité de l'axe de câblage mais sans frottement sur un élément central évitant ainsi des tensions élevées sur les fils qui auraient autrement pour effet de défaire le câblage SZ du câble.

Selon un autre aspect, l'invention a également pour objet un dispositif de câblage pour machine de câblage de type SZ pour assembler en hélice une pluralité de brins de fil unitaires, ledit dispositif comportant des moyens rotatifs de répartition de brins de fils unitaires à travers lesquels s'étendent lesdits brins, lesdits moyens rotatifs étant animés d'un mouvement de rotation alterné, une filière de câblage à travers laquelle passent lesdits brins pour converger vers un point, désigné par point de câblage, en aval duquel lesdits brins sont réunis par enroulement en hélice alternativement dans des sens opposés, des moyens d'extrusion comprenant une filière d'extrusion dans laquelle les brins une fois câblés ou assemblés sont recouverts d'une matière d'extrusion, caractérisé en ce que le point de câblage des brins unitaires est situé dans le voisinage immédiat de la filière d'extrusion et en ce que ledit dispositif est associé à une unité de refroidissement disposée en aval de ladite filière d'extrusion et à travers laquelle s'étend le câble en sortie de ladite filière, et en ce que ladite unité comprend un système prévenant la rotation du câble par rapport à son axe longitudinal.

D'autres avantages et caractéristiques de l'invention apparaîtront plus clairement à la lecture de la description suivante d'un mode de réalisation de l'invention donnée à titre purement illustratif et non limitatif, cette description étant faite en liaison avec le dessin dans lequel :
- la figure 1 est une vue d'ensemble schématique d'une installation de fabrication de câbles comprenant un dispositif de câblage selon l'invention;
- les figures 2 et 3, qui sont des vues destinées à se juxtaposer dans cet ordre, représentent respectivement une vue de côté partiellement en coupe et une vue en coupe de deux parties complémentaires du dispositif de câblage selon l'invention, la figure 3 étant représentée à une plus grande échelle;
- la figure 4 est une section selon la ligne IV-IV de la figure 2 des moyens de guidage des brins de fil unitaires équipant le dispositif de câblage selon l'invention,
- la figure 5 est une section selon la ligne V-V de la figure 2 des moyens de guidage des brins de fil unitaires équipant le dispositif de câblage selon l'invention,
- la figure 6 est une vue de côté du système prévenant la rotation du câble équipant le dispositif de câblage selon l'invention; et
- la figure 7 est une vue en coupe selon la ligne VII-VII de la figure 6.

La description de l'invention va être faite dans le cadre d'une application à la fabrication d'un câble électrique en câblage alterné ou câblage SZ à sept brins unitaires, chacun des brins étant formé d'un fil conducteur isolé. Toutefois, il va de soi que l'invention n'est nullement limitée à cette application et que la nature et le nombre des brins de fil unitaires peuvent varier en fonction du câble souhaité. L'invention pourra par exemple s'appliquer tout aussi avantageusement à la fabrication de ce type de câbles électriques comprenant une âme et formés à partir de fils conducteurs non isolés, ou encore à la fabrication de câbles optiques à partir de brins de fil formés par des fibre optiques.

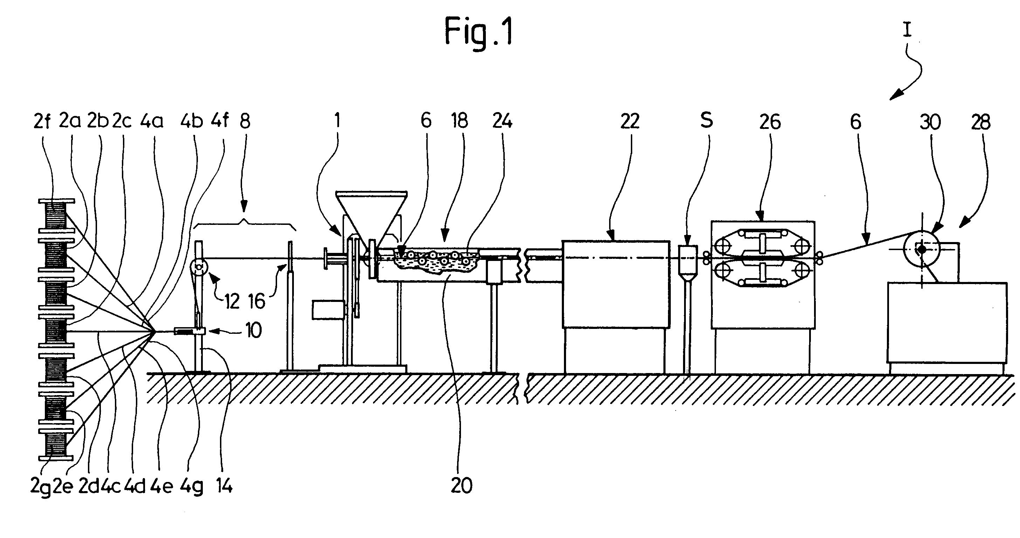

En se référant à la figure 1 on voit une représentation schématique d'une installation I de fabrication de câbles en câblage alterné ou câblage SZ comprenant un dispositif de câblage selon l'invention, ledit dispositif de câblage étant désigné par la référence générale 1.

Selon la forme de réalisation représentée à la figure 1, l'installation I comprend, en amont du dispositif de câblage 1, sept bobines débitrices 2a, 2b, 2c, 2d, 2e, 2f et 2g où sont enroulés respectivement des brins de fil unitaires 4a, 4b, 4c, 4d, 4e, 4f et 4g. Ces bobines fournissent, de manière classique, les brins de fil unitaires au dispositif de câblage 1 ou station de câblage dans lequel les brins de fil unitaires 4a, 4b, 4c, 4d, 4e, 4f et 4g sont câblés ou réunis ensemble par torsion dans des sens alternés et recouverts d'une gaine GA pour former un câble 6 (figure 3).

De manière classique, des moyens de support et de guidage 8 des brins de fil unitaires sont disposés entre les bobines débitrices 2a, 2b, 2c, 2d, 2e, 2f et 2g et la station de câblage 1. Dans l'exemple représenté, les moyens de support et de guidage 8 comprennent des poulies à gorges multiples respectivement de renvoi 10 et de support 12 montées folles sur un pied de support 14 et des deuxièmes moyens de support 16 classiques à travers lesquels passent les brins 4a, 4b, 4c, 4d, 4e, 4f et 4g avant d'entrer dans le dispositif de câblage 1 selon l'invention dans lequel des brins de fil sont assemblés par torsion et recouverts d'une matière d'extrusion.

Le câble 6 sortant du dispositif de câblage 1 passe ensuite dans une station de refroidissement 18 dans laquelle la matière d'extrusion - encore chaude - formant la gaine GA du câble 6 est refroidie. Cette station de refroidissement 18 comprend de façon classique des moyens de refroidissement formés d'un bac longitudinal 20 dans lequel circule à l'aide de moyens de pompage 22 un liquide caloporteur 24 tel que de l'eau.

En sortie de la station de refroidissement 18, le câble 6 est introduit, après séchage dans une station S, dans des moyens de traction 26 dans lesquels il est tiré et dirigé vers un poste de réception 28 dans lequel il est bobiné de façon classique sur une bobine réceptrice 30.

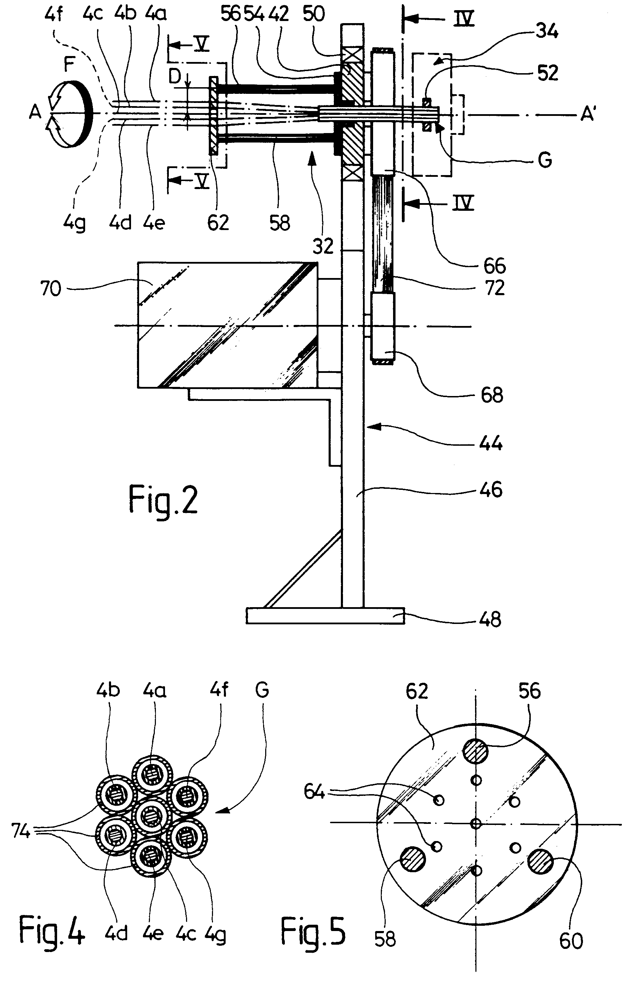

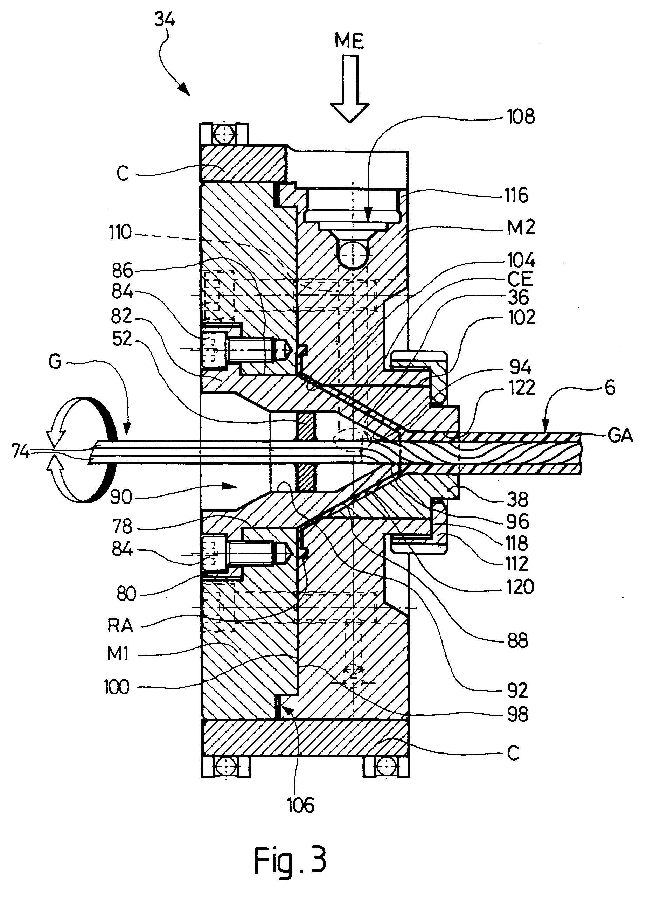

Les différents moyens ou postes qui viennent d'être décrits, c'est-à-dire les moyens de support et de guidage 8, le dispositif de câblage 1, les moyens de refroidissement 18, les moyens de séchage 5, les moyens de traction 26, et le poste de réception 28 sont situés sensiblement sur un axe A-A', le défilement général du câble 6 se faisant de la gauche de la figure 1 vers la droite de celle-ci, ou encore dans le sens A-A' (figure 2).

En se référant maintenant plus spécialement aux figures 2 et 3, on voit un mode de réalisation du dispositif de câblage selon l'invention 1 pour assembler par torsions alternatives dans deux sens opposés une pluralité de brins de fil unitaires.

Le dispositif de câblage 1 comprend des moyens rotatifs de répartition 32 (figure 2) des brins de fil unitaires 4a, 4b, 4c, 4d, 4e, 4f et 4g provenant des bobines débitrices 2a, 2b, 2c, 2d, 2e, 2f et 2g et un ensemble 34 (figure 3) comprenant notamment deux matrices M1, M2 de formes complémentaires (une matrice mâle M1 et une matrice femelle M2) comportant respectivement une filière de câblage 36 et une filière d'extrusion 38, les matrices M1 et M2 étant entourées par un élément de chauffe C. A noter que les brins de fils unitaires traversent la filière de câblage pour converger vers un point, désigné par point de câblage, en aval duquel lesdits brins sont réunis par enroulement en hélice alternativement dans des sens opposés par les moyens de rotatifs de répartition.

Selon ce mode de réalisation, les moyens rotatifs de répartition 32 comprennent une pluralité G de tubes de guidage, qui seront décrits plus en détail ci-après, solidaires d'un disque 42 monté en rotation sur des moyens de support 44. En l'occurrence les moyens de support 44 sont formés d'une plaque de support 46 munie, à une extrémité, d'une plaque de base 48 reposant sur le sol. Le disque 42 est monté en rotation sur la plaque 46 par l'intermédiaire d'un palier 50 représenté schématiquement au dessin. Les tubes G portent à une extrémité (à droite sur le dessin) une bague de guidage 52 dont la fonction sera décrite ci-après. Cette bague de guidage 52 est solidaire en rotation des tubes G et peut être fixée aux tubes par soudage ou par tout autre moyen approprié. Un plateau 54, également solidaire du disque 42, est fixé à une deuxième extrémité des tubes G (à gauche sur le dessin). Le plateau 54 forme des moyens de support à trois piliers 56, 58 et 60 (figure 5) régulièrement répartis autour de l'axe A-A' s'étendant parallèlement à cet axe et à une distance D de celui-ci. Une platine 62 de guidage et de répartition des brins de fil unitaires est fixée à l'extrémité des piliers 56, 58 et 60. Il est bien entendu que selon une variante, le plateau 54 peut être omis et que les piliers 56, 58 et 60 peuvent être directement fixés au disque 42.

La platine 62 a la forme d'un disque dans lequel est ménagé une pluralité de trous 64 régulièrement répartis sur un diamètre du disque, le nombre de trous 64 étant déterminés par le nombre de brins de fil unitaires provenant des bobines débitrices. Il va de soi que selon une variante les trous 64 peuvent être remplacés par des encoches qui s'ouvrent à la périphérie du disque 62.

Les tubes G ainsi que les divers éléments qui y sont solidaires et qui tournent autour de l'axe A-A' dans le palier 50, sont entraînés en rotation alternativement dans des sens opposés (symbolisés par la flèche F au dessin) par une poulie 66 reliée à la poulie 68 d'un moteur 70 par une courroie 72. La rotation du moteur 70 est commandée par un poste de commande central (non représenté) qui reçoit différents signaux de consigne et/ou de mesure des certains postes de l'installation I pour asservir la vitesse du moteur 70 en fonction du câble que l'on désire fabriquer.

Comme cela ressort particulièrement de la figure 4, on voit que l'ensemble G comprend des tubes 74 répartis régulièrement, les tubes 74 étant destinés à recevoir respectivement le faisceau de brins de fil unitaires qui convergent vers la filière de câblage 36 à partir de la platine 62, et dont seuls cinq ont été représentés à la figure 2.

On notera aussi à ce propos que le tube central peut être avantageusement utilisé pour le guidage de l'âme dans la fabrication de câble comportant une âme. Bien entendu, le nombre de tubes, leur arrangement spatial ainsi que la forme de leur section peuvent être modifiés selon les cas.

En se référant désormais plus particulièrement à la figure 3, on voit la structure de l'ensemble 34 et comment cet ensemble coopère avec les moyens rotatifs de répartition 32.

La matrice mâle M1 a la forme générale d'une plaque circulaire comprenant en son centre un alésage 78 débouchant dans une chambre 80 coaxiale à ce dernier. La filière de câblage 36 comprend trois parties, respectivement une première partie extrême 82 ayant la forme d'une collerette s'étendant dans la chambre 80 et par laquelle la filière 36 est fixé par des vis 84 sur la matrice M1, une partie médiane 86 de forme cylindrique s'étendant dans l'alésage 78 et une troisième partie extrême ayant une forme tronconique 88 faisant saillie de la matrice M1.

La filière de câblage 36 comprend un alésage 90 à travers lequel s'étendent et se concentrent les brins de fil unitaires provenant des moyens de support et de guidage 32. L'alésage 90 comprend notamment une portion cylindrique 92 qui se poursuit dans le sens de câblage A-A' par une portion tronconique 94 pour se terminer par un orifice 96 par lequel passent les brins de fil unitaires qui viennent d'être torsadés. La portion cylindrique 92 sert de portée à la bague de guidage 52 de l'ensemble G de tubes de guidage.

On remarquera à ce propos que de façon avantageuse, l'extrémité libre des tubes 74 est aussi proche que possible de l'orifice 96, de sorte que la torsion des brins de fil unitaires induite par les moyens 32 est maintenue dans l'orifice 96.

La matrice M1 comporte une face 98 contre laquelle vient s'appuyer une face 100 complémentaire de la matrice M2 qui présente également la forme générale d'une plaque circulaire. La matrice M2 comprend en son centre un alésage 102 qui débouche sur une portion tronconique 104 coaxiale à ce dernier et dans lequel est disposée la filière d'extrusion 38.

On notera à ce propos que les axes de la filière de câblage et de la filière d'extrusion sont coaxiaux et sont confondus, et que le positionnement de la matrice M1 par rapport à la matrice M2 est assuré par des moyens de centrage 106 formés par un épaulement ménagé sur la face 98 et un rebord de forme complémentaire ménagé sur la face 100 dans l'exemple représenté.

La matrice M2 comprend un orifice d'alimentation 108 de la matière d'extrusion débouchant par l'intermédiaire de deux conduits de distribution 110 qui débouchent à leur tour dans une rainure annulaire RA reliée à la portion conique 104 de l'alésage 102. Pour des raisons de clarté un seul des conduits de distribution 110 a été représenté en pointillés sur le dessin.

La filière d'extrusion, qui présente une forme générale extérieure cylindrique, est disposée dans l'alésage 102 de la matrice M2 et se trouve maintenue en place dans ce dernier au moyen d'un écrou 112 vissé sur une portion filetée ménagée dans la face opposée 116 à la face 100 de la matrice M2, l'écrou s'appuyant sur un épaulement 118 de la filière 38.

On remarquera à ce propos que la filière d'extrusion 38 et la filière de câblage peuvent être ainsi facilement interchangeables selon les dimensions ou le type de câble que l'on souhaite fabriquer.

La filière 38 comprend un alésage formé d'une portion tronconique 120 débouchant sur une portion cylindrique 122, cette dernière portion définissant le diamètre définitif du câble 6.

Les matrices M1 et M2 définissent ainsi lorsqu'elles sont assemblées définissent une chambre d'extrusion CE dans laquelle débouchent des conduits d'alimentation 110 de la matière d'extrusion, la chambre d'extrusion CE étant délimitée par la surface extérieure tronconique de la filière de câblage 36, la surface intérieure tronconique de la filière d'extrusion 38, la rainure annulaire RA et la partie de la face 98 qui se trouve en regard de la rainure annulaire RA. La filière de câblage forme ainsi une partie des moyens d'extrusion.

La matière d'extrusion ME à l'état visqueux est donc amenée sous pression par l'intermédiaire d'un dispositif d'extrusion (non représenté) dans la chambre d'extrusion CE via les conduits de distribution 110 et dans laquelle elle est forcée dans le sens de défilement du câble 6 pour venir en contact étroit avec ce dernier et l'envelopper.

On remarque donc que de façon avantageuse, la matière d'extrusion ME vient en contact avec les brins de fil unitaires immédiatement à la sortie de la filière de câblage 36, c'est-à-dire immédiatement après que les moyens rotatifs de répartition 32 et les tubes de guidage 74 ont induit les torsions en sens alternés aux brins de fils unitaires, de sorte que ces brins sont figés en position par la matière d'extrusion ME dès leur sortie de la filière de câblage 36 et que l'on élimine quasiment les risques que les brins unitaires reviennent parallèles dans les zones d'inversion de sens de torsion des brins de fil.

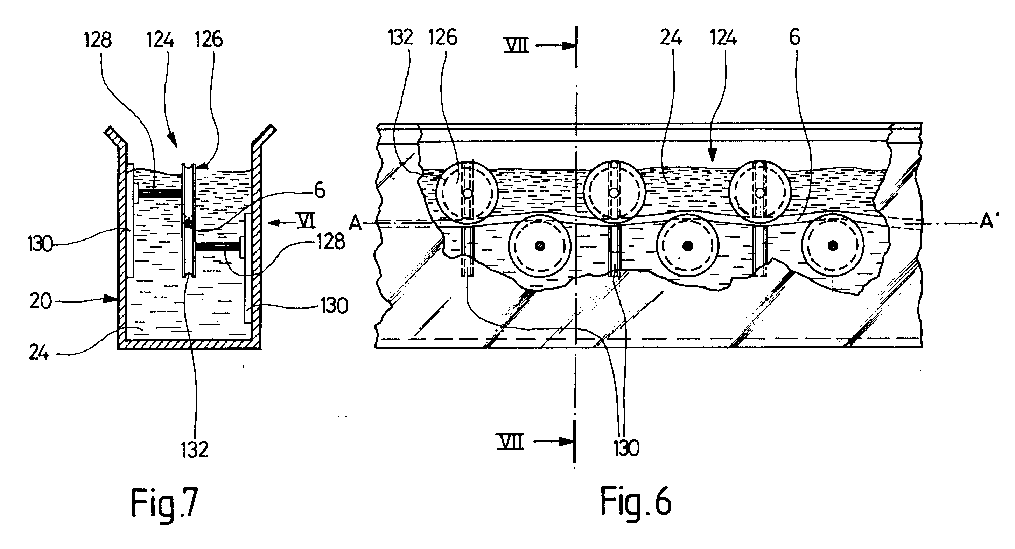

Selon un mode de réalisation particulièrement intéressant, le dispositif de câblage 1 comprend en outre un système 124 (figure 7) prévenant la rotation du câble 6 par rapport à son axe longitudinal A-A'. Dans l'exemple illustré, le système 124 est installé à l'intérieur du bac 20 du poste de refroidissement 18, en étant au moins partiellement immergé dans le liquide caloporteur 24. Le système 124 comprend une pluralité de galets 126 disposés alternativement de part et d'autre d'un axe longitudinal sensiblement parallèle à l'axe de câblage A-A' et le long duquel s'étend le câble 6 en aval de la filière d'extrusion. Les galets 126 sont montés sur des axes 128 qui peuvent coulisser dans des rails 130 fixés sur des parois longitudinales intérieures du bac 20. Les galets 126 comprennent chacun, à la périphérie de leur face de roulement, une gorge 132 ayant un fond de forme arrondie et qui est destinée à recevoir le câble 6. La tension appliquée sur le câble 6 par les galets 126 empêche ainsi toute rotation du câble 6 sur lui même alors que la matière d'extrusion de la gaine GA n'a pas encore complètement durci.

On notera à ce propos que la tension appliquée sur le câble 6 peut être simplement ajustée en déplaçant les axes 128 le long de leur rail 130.

Pour fixer les idées, un dispositif de câblage selon l'invention permet d'être avantageusement utilisés pour la fabrication de câbles multibrins composés de fils ayant respectivement des diamètres compris entre 0,5 et 4 mm à une vitesse pouvant atteindre par exemple 400 m/min. Le pas de câblage minimum dépend de la vitesse de câblage et est de l'ordre de 20 mm et le nombre de tours moyen effectué par les moyens 34 entre chaque changement de sens de rotation est de l'ordre de 15 tours dans un sens ou dans l'autre. Toutes ces valeurs sont bien entendu données à titre indicatif et ne limitent d'aucune manière la portée de l'invention.

Par ailleurs, on notera bien entendu que le dispositif de câblage 1 selon l'invention n'est pas nécessairement utilisé en liaison avec les moyens de guidage 74 et les moyens 124 et que l'utilisation de ces moyens ne constitue que des modes préférés de réalisation de l'invention.

## Revendications

1. Dispositif de câblage pour machine de câblage de type SZ pour assembler en hélice une pluralité de brins de fil unitaires, ledit dispositif comportant des moyens rotatifs de répartition de brins de fil unitaires à travers lesquels s'étendent lesdits brins, lesdits moyens rotatifs étant animés d'un mouvement de rotation alterné, une filière de câblage à travers laquelle passent lesdits brins pour converger vers un point, désigné par point de câblage, en aval duquel lesdits brins sont réunis par enroulement en hélice alternativement dans des sens opposés, des moyens d'extrusion comprenant une filière d'extrusion dans laquelle les brins une fois câblés ou assemblés sont recouverts d'une matière d'extrusion, caractérisé en ce que le point de câblage des brins unitaires est situé dans le voisinage immédiat de la filière d'extrusion et en ce que ledit dispositif comprend en outre des moyens de guidage de chaque brins de fil, lesdits moyens de guidage s'étendant entre lesdits moyens rotatifs de répartition et ladite filière de câblage.

2. Dispositif de câblage selon la revendication 1, caractérisé en ce que lesdits moyens de guidage comprennent une pluralité de tubes de guidage solidaires des moyens rotatifs de répartition et dans lesquelles s'étendent respectivement lesdits brins de fil unitaires.

3. Dispositif de câblage selon la revendication 1 ou 2, caractérisé en ce que le point de câblage est situé sensiblement à l'endroit d'arrivée de la matière d'extrusion dans ladite filière d'extrusion.

4. Dispositif de câblage selon l'une des revendications 1 à 3, caractérisé en ce que la filière de câblage forme une partie des moyens d'extrusion. en outre des moyens de guidage de chaque brins de fil, lesdits moyens de guidage s'étendant entre lesdits moyens rotatifs de répartition et ladite filière de câblage.

5. Dispositif de câblage selon l'une des revendications précédentes, caractérisé en ce qu'il est associé à une unité de refroidissement disposée en aval de ladite filière d'extrusion et à travers laquelle s'étend le câble en sortie de ladite filière, et en ce que ladite unité comprend un système prévenant la rotation du câble par rapport à son axe longitudinal.

6. Dispositif de câblage selon la revendication 5, caractérisé en ce que ledit système prévenant la rotation comprend une pluralité de galets disposés alternativement de part et d'autre d'un axe longitudinal sensiblement parallèle à l'axe de câblage.

7. Dispositif de câblage selon la revendication 6, caractérisé en ce que les galets comprennent chacun, à la périphérie de leur face de roulement, une gorge ayant un fond de forme arrondie.

8. Dispositif de câblage pour machine de câblage de type SZ pour assembler en hélice une pluralité de brins de fil unitaires, ledit dispositif comportant des moyens rotatifs de répartition de brins de fils unitaires à travers lesquels s'étendent lesdits brins, lesdits moyens rotatifs étant animés d'un mouvement de rotation alterné, une filière de câblage à travers laquelle passent lesdits brins pour converger vers un point, désigné par point de câblage, en aval duquel lesdits brins sont réunis par enroulement en hélice alternativement dans des sens opposés, des moyens d'extrusion comprenant une filière d'extrusion dans laquelle les brins une fois câblés ou assemblés sont recouverts d'une matière d'extrusion, caractérisé en ce que le point de câblage des brins unitaires est situé dans le voisinage immédiat de la filière d'extrusion et en ce qu'il est associé à une unité de refroidissement disposée en aval de ladite filière d'extrusion et à travers laquelle s'étend le câble en sortie de ladite filière, et en ce que ladite unité comprend un système prévenant la rotation du câble par rapport à son axe longitudinal.

9. Dispositif de câblage selon la revendication 8, caractérisé en ce que ledit système prévenant la rotation comprend de part et d'autre d'un axe longitudinal sensiblement parallèle à l'axe de câblage.

10. Dispositif de câblage selon la revendication 9, caractérisé en ce que les galets comprennent chacun, à la périphérie de leur face de roulement, une gorge ayant un fond de forme arrondie.
